# EUROPEAN PATENT APPLICATION

(11) **EP 4 056 639 A1**
(43) Date of publication of application: **14.09.2022**
(21) Application number: 22158697.7
(22) Date of filing: 25.02.2022
(51) Int. Cl.: C08L 7/00, B60C 1/00, C08K 3/04, C08K 3/36, C08L 9/00, C08L 9/06, C08L 25/06, C08L 45/02, C08L 101/02, C08L 101/06, C08L 101/10

(54) **ELASTOMER COMPOSITION AND TIRE**

(30) Priority: 12.03.2021 JP 2021040602
(71) Applicant: Sumitomo Rubber Industries, Ltd., Kobe-shi, Hyogo-ken 651-0072 (JP)
(72) Inventor: KASAI, Yuki, Kobe-shi, Hyogo, 651-0072 (JP)
(74) Representative: Manitz Finsterwald Patent- und Rechtsanwaltspartnerschaft mbB

(57) **Abstract**

Provided are an elastomer composition which provides improved overall performance in terms of fuel economy, abrasion resistance on a wet road surface, and wet grip performance, and a tire including the elastomer composition. Included is an elastomer composition containing one or more elastomer components, silica, carbon black, and a functionalized resin having a functional group containing at least one element selected from the group consisting of oxygen, silicone, and nitrogen, the elastomer composition satisfying the following relationships (i) and (ii) :
(i) when Ash + BC > PC, Ash + BC - PC ≤ AE;
(ii) when Ash + BC ≤ PC, AE + Ash ≤ PC and BC ≤ AE
wherein PC represents the polymer content, BC represents the carbon black content, AE represents the acetone extractable content, and Ash represents the ash content.

## Description

### TECHNICAL FIELD

The present disclosure relates to an elastomer composition and a tire.

### BACKGROUND ART

Tires have been improved to provide various desired properties such as fuel economy, abrasion resistance, and grip performance. However, in recent years it has also become desirable to improve fuel economy, abrasion resistance on a wet road surface, and other properties.

### SUMMARY OF DISCLOSURE

### TECHNICAL PROBLEM

The present disclosure aims to solve the above problem and provide an elastomer composition which provides improved overall performance in terms of fuel economy, abrasion resistance on a wet road surface, and wet grip performance, and a tire including the elastomer composition.

### SOLUTION TO PROBLEM

The present disclosure relates to a tire, including an elastomer composition, the elastomer composition containing: one or more elastomer components; silica; carbon black; and a functionalized resin having a functional group containing at least one element selected from the group consisting of oxygen, silicone, and nitrogen, the elastomer composition satisfying the following relationships (i) and (ii):
(i) when Ash + BC > PC, Ash + BC - PC ≤ AE;
(ii) when Ash + BC ≤ PC, AE + Ash ≤ PC and BC ≤ AE
wherein PC represents a polymer content, BC represents a carbon black content, AE represents an acetone extractable content, and Ash represents an ash content.

### ADVANTAGEOUS EFFECTS OF DISCLOSURE

The elastomer composition of the present disclosure contains one or more elastomer components, silica, carbon black, and a functionalized resin having a functional group containing at least one element selected from the group consisting of oxygen, silicone, and nitrogen, and satisfies relationships (i) and (ii). Thus, the elastomer composition provides improved overall performance in terms of fuel economy, abrasion resistance on a wet road surface, and wet grip performance.

### BRIEF DESCRIPTION OF DRAWINGS

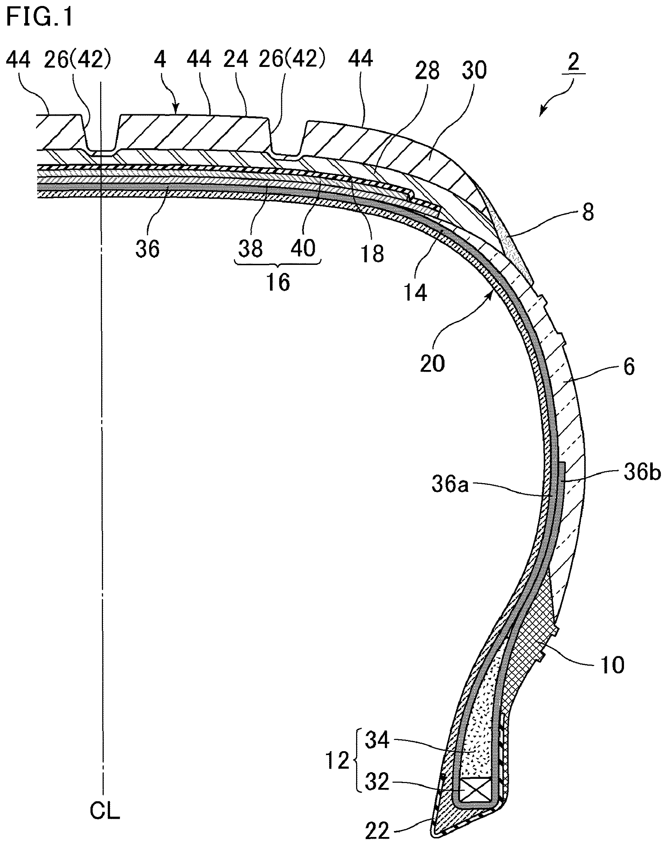

Fig. 1 is a cross-sectional view of a part of a pneumatic tire.

### DESCRIPTION OF EMBODIMENTS

The elastomer composition of the present disclosure contains one or more elastomer components, silica, carbon black, and a functionalized resin having a functional group containing at least one element selected from the group consisting of oxygen, silicone, and nitrogen, and satisfies relationships (i) and (ii). Such an elastomer composition provides improved overall performance in terms of fuel economy, abrasion resistance on a wet road surface, and wet grip performance. In addition, it provides good wet grip performance.

The mechanism for this advantageous effect is not clear, but is believed to be as follows.

It is considered that the functionalized resin having a functional group containing at least one element selected from the group consisting of oxygen, silicone, and nitrogen reacts or interacts with the silica and coats the silica surface, so that the friction around the silica is reduced, which can contribute to less heat build-up. However, if the silica and the functionalized resin are insufficiently dispersed, they form aggregates and thus heat will be generated due to the friction among the silica particles or among the functionalized resin molecules, thereby resulting in deteriorated fuel economy. Moreover, when in contact with a road surface that is cold enough to solidify the functionalized resin (for example, a wet road surface), hard silica/functionalized resin aggregates are formed, resulting in deteriorated abrasion resistance. Therefore, it is considered very important to disperse the silica and the functionalized resin in incorporating the functionalized resin.

First, (i) when Ash (ash content) + BC (carbon black content) > PC (polymer content), i.e., when the amount of fillers is relatively large, the viscosity is increased as the carbon black content is higher than the elastomer content. Thus, it is considered that by adjusting the composition to "Ash + BC - PC ≤ AE (acetone extractable content)" to reduce the viscosity while ensuring AE, the dispersion can be sufficiently improved.

On the other hand, (ii) when Ash (ash content) + BC (carbon black content) ≤ PC (polymer content), i.e., when the amount of fillers is relatively small, the coating with the functionalized resin and the dispersing effect derived therefrom are expected. Thus, it is considered that by adjusting the composition to "AE + Ash ≤ PC" to reduce the combined amount of the opposing materials AE (lipophilic components such as oils) and Ash (hydrophilic components such as silica) compared to PC, sufficient dispersion can be obtained. However, if AE (acetone extractable content) is lower than BC (carbon black content), the AE components (such as oils) will be captured by the carbon black. Thus, it is considered necessary to adjust the composition to BC ≤ AE so that the acetone extractable content is higher than the carbon black content.

Accordingly, it is believed that when the (i) and (ii) conditional relationships are satisfied, both the incorporation of the functionalized resin and improved dispersion of the silica and the functionalized resin can be enabled, resulting in improved overall performance in terms of fuel economy abrasion resistance on a wet road surface, and wet grip performance. Further, this is believed to also provide good wet grip performance.

As described above, the elastomer composition solves the problem (purpose) of improving overall performance in terms of fuel economy, abrasion resistance on a wet road surface, and wet grip performance by formulating a composition containing silica, carbon black, and a functionalized resin having a functional group containing at least one element selected from the group consisting of oxygen, silicone, and nitrogen to satisfy "(i) when Ash + BC > PC, Ash + BC - PC ≤ AE" and "(ii) when Ash + BC ≤ PC, AE + Ash ≤ PC and BC ≤ AE". In other words, the parameters of "(i) when Ash + BC > PC, Ash + BC - PC ≤ AE" and "(ii) when Ash + BC ≤ PC, AE + Ash ≤ PC and BC ≤ AE" do not define the problem (purpose), and the problem herein is to improve overall performance in terms of fuel economy, abrasion resistance on a wet road surface, and wet grip performance. In order to solve this problem, the elastomer composition has been formulated to satisfy the parameters.

The elastomer composition satisfies the following relationships (i) and (ii):
(i) when Ash + BC > PC, Ash + BC - PC ≤ AE;
(ii) when Ash + BC ≤ PC, AE + Ash ≤ PC and BC ≤ AE
wherein PC represents the polymer content, BC represents the carbon black content, AE represents the acetone extractable content, and Ash represents the ash content. Here, the units of PC, BC, AE, and Ash are % by mass.

As for (i) when Ash + BC > PC, Ash + BC - PC ≤ AE, the ratio of (Ash + BC - PC)/AE is preferably 0.50 or lower, more preferably 0.30 or lower, still more preferably 0.23 or lower, particularly preferably 0.18 or lower. The lower limit is preferably 0.01 or higher, more preferably 0.03 or higher, still more preferably 0.05 or higher. When the ratio is within the range indicated above, the advantageous effect tends to be better achieved.

(i) When Ash + BC > PC, PC is preferably 20% by mass or more, more preferably 25% by mass or more, still more preferably 30% by mass or more, particularly preferably 32% by mass or more. The upper limit is preferably 55% by mass or less, more preferably 48% by mass or less, still more preferably 41% by mass or less, particularly preferably 37% by mass or less. When PC is within the range indicated above, the advantageous effect tends to be better achieved.

(i) When Ash + BC > PC, BC is preferably 1.0% by mass or more, more preferably 1.8% by mass or more, still more preferably 2.5% by mass or more, particularly preferably 3.0% by mass or more. The upper limit is preferably 10.0% by mass or less, more preferably 7.0% by mass or less, still more preferably 6.0% by mass or less, particularly preferably 5.0% by mass or less. When BC is within the range indicated above, the advantageous effect tends to be better achieved.

(i) When Ash + BC > PC, AE is preferably 8% by mass or higher, more preferably 10% by mass or higher, still more preferably 13% by mass or higher, particularly preferably 15% by mass or higher. The upper limit is preferably 30% by mass or lower, more preferably 25% by mass or lower, still more preferably 21% by mass or lower, particularly preferably lower than 20% by mass, most preferably 19% by mass or lower. When AE is within the range indicated above, the advantageous effect tends to be better achieved. In particular, when AE is adjusted to lower than 20% by mass, it is considered that since slippage during kneading can be prevented so that poor dispersion of the silica, resin, and other components can be more effectively reduced, the silica and resin can be prevented from forming aggregates, and thus the heat generation due to the friction among the silica particles or among the resin molecules can be effectively reduced. As a result, it is believed that the deterioration in fuel economy can be effectively reduced, and therefore the overall performance in terms of fuel economy, abrasion resistance on a wet road surface, and wet grip performance can be significantly (synergistically) improved.

(i) When Ash + BC > PC, Ash is preferably 30% by mass or higher, more preferably 36% by mass or higher, still more preferably 37% by mass or higher, particularly preferably 38% by mass or higher. The upper limit is preferably 50% by mass or lower, more preferably 45% by mass or lower, still more preferably 42% by mass or lower, particularly preferably 40% by mass or lower. When Ash is within the range indicated above, the advantageous effect tends to be better achieved.

As for (ii) when Ash + BC ≤ PC, AE + Ash ≤ PC, the ratio of (AE + Ash)/PC is preferably 0.97 or lower, more preferably 0.90 or lower, still more preferably 0.80 or lower, particularly preferably 0.76 or lower. The lower limit is preferably 0.50 or higher, more preferably 0.67 or higher, still more preferably 0.70 or higher, particularly preferably 0.71 or higher. When the ratio is within the range indicated above, the advantageous effect tends to be better achieved.

As for (ii) when Ash + BC ≤ PC, BC ≤ AE, the ratio of BC/AE is preferably 0.53 or lower, more preferably 0.50 or lower, still more preferably 0.34 or lower, particularly preferably 0.32 or lower. The lower limit is preferably 0.05 or higher, more preferably 0.08 or higher, still more preferably 0.10 or higher, particularly preferably 0.11 or higher. When the ratio is within the range indicated above, the advantageous effect tends to be better achieved.

(ii) When Ash + BC ≤ PC, PC is preferably 40% by mass or more, more preferably 50% by mass or more, still more preferably 55% by mass or more, particularly preferably 57% by mass or more. The upper limit is preferably 80% by mass or less, more preferably 75% by mass or less, still more preferably 70% by mass or less, particularly preferably 65% by mass or less. When PC is within the range indicated above, the advantageous effect tends to be better achieved.

(ii) When Ash + BC ≤ PC, BC is preferably 1.0% by mass or more, more preferably 1.5% by mass or more, still more preferably 1.7% by mass or more, particularly preferably 1.8% by mass or more. The upper limit is preferably 7.0% by mass or less, more preferably 5.0% by mass or less, still more preferably 3.6% by mass or less, particularly preferably 3.5% by mass or less. The upper limit may be 2.4% by mass or less or 2.3% by mass or less. When BC is within the range indicated above, the advantageous effect tends to be better achieved.

(ii) When Ash + BC ≤ PC, AE is preferably 5% by mass or higher, more preferably 7% by mass or higher, still more preferably 10% by mass or higher, particularly preferably 16% by mass or higher. The upper limit is preferably 30% by mass or lower, more preferably 25% by mass or lower, still more preferably 22% by mass or lower, particularly preferably lower than 20% by mass. When AE is within the range indicated above, the advantageous effect tends to be better achieved. In particular, when AE is adjusted to lower than 20% by mass, it is believed that the overall performance in terms of fuel economy, abrasion resistance on a wet road surface, and wet grip performance can be significantly (synergistically) improved as described above.

(ii) When Ash + BC ≤ PC, Ash is preferably 20% by mass or higher, more preferably 25% by mass or higher, still more preferably 28% by mass or higher, particularly preferably 31% by mass or higher. The upper limit is preferably 37% by mass or lower, more preferably 35% by mass or lower, still more preferably 33% by mass or lower, particularly preferably 32% by mass or lower. When Ash is within the range indicated above, the advantageous effect tends to be better achieved.

Here, the physical properties of the elastomer composition are measured by the following methods.

First, the acetone extractable content (AE) (unit: % by mass of the elastomer composition (sample)) of the elastomer composition (sample) is measured by a method for measuring the acetone extractable content in accordance with JIS K 6229:2015.

The polymer content (PC) (unit: % by mass of the elastomer composition (sample)) is calculated from a decrease (mass) measured when the sample remaining after the acetone extraction is heated (from room temperature to 750°C) in nitrogen for pyrolysis and gasification of the organic matter in accordance with JIS K6226-1:2003.

The carbon black content (BC) (unit: % by mass of the elastomer composition (sample)) is calculated from a decrease (mass) measured when the sample after the pyrolysis and gasification is heated in the air for oxidative combustion.

The ash content (Ash) (unit: % by mass of the elastomer composition (sample)) is calculated from the mass of the components (ash) which remain unburned in the oxidative combustion.

Based on these definitions, the sum of AE, PC, BC, and Ash is 100% by mass.

AE, PC, BC, and Ash may be controlled by methods known by a person in the art. For example, AE tends to be increased by increasing the amount of softeners such as oils in the elastomer composition. PC tends to be increased by increasing the amount of elastomer components in the elastomer composition. BC tends to be increased by increasing the amount of carbon black in the elastomer composition. Ash tends to be increased by increasing the amount of components which remain unburned in oxidative combustion, such as silica, in the elastomer composition.

### (Elastomer component)

The elastomer components of the elastomer composition may include a diene rubber, for example. Examples of the diene rubber include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers.

The diene rubber may be either an unmodified or modified diene rubber.

The modified diene rubber may be any diene rubber having a functional group interactive with filler such as silica. Examples include a chain end-modified diene rubber obtained by modifying at least one chain end of a diene rubber with a compound (modifier) having the functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino (preferably amino whose hydrogen atom is replaced with a C1-C6 alkyl group), alkoxy (preferably C1-C6 alkoxy), and alkoxysilyl (preferably C1-C6 alkoxysilyl) groups.

The elastomer components may include a thermoplastic elastomer. Examples of the thermoplastic elastomer include: olefin thermoplastic elastomers; styrene thermoplastic elastomers such as styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS); vinyl chloride thermoplastic elastomers; urethane thermoplastic elastomers; polyamide thermoplastic elastomers; polyester thermoplastic elastomers; and fluorine thermoplastic elastomers.

From the standpoint of overall performance in terms of fuel economy, abrasion resistance on a wet road surface, and wet grip performance, SBR, BR, and isoprene-based rubbers are preferred among these elastomer components. The elastomer components preferably include two or more elastomer components which include an isoprene-based rubber and/or BR, more preferably an isoprene-based rubber and/or BR and SBR. These elastomer components may be used alone or in combinations of two or more. The use of an isoprene-based rubber and/or BR can significantly (synergistically) improve overall performance in terms of fuel economy, abrasion resistance on a wet road surface, and wet grip performance. This is believed to be because the use of an isoprene-based rubber and/or BR reduces the viscosity of the rubber, so that the dispersion of the resin and silica localized in the rubber is further improved.

Any SBR may be used, including for example emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 10% by mass or higher, still more preferably 15% by mass or higher. The styrene content is also preferably 60% by mass or lower, more preferably 40% by mass or lower, still more preferably 30% by mass or lower. When the styrene content is within the range indicated above, the advantageous effect tends to be better achieved.

Herein, the styrene content of the SBR is determined by ¹H-NMR analysis.

The vinyl content of the SBR is preferably 5 mol% or higher, more preferably 10 mol% or higher, still more preferably 15 mol% or higher. The vinyl content is preferably 75 mol% or lower, more preferably 70 mol% or lower. When the vinyl content is within the range indicated above, the advantageous effect tends to be better achieved.

The vinyl content (1,2-butadiene unit content) can be measured by infrared absorption spectrometry.

SBR products manufactured or sold by Sumitomo Chemical Co., Ltd., JSR Corporation, Asahi Kasei Corporation, Zeon Corporation, etc. may be used as the SBR.

The SBR may be either unmodified or modified SBR. Examples of the modified SBR include those into which functional groups as listed for the modified diene rubber are introduced.

When the elastomer composition contains SBR, the SBR content based on 100% by mass of the elastomer components is preferably 10% by mass or more, more preferably 50% by mass or more, still more preferably 60% by mass or more, particularly preferably 70% by mass or more. The upper limit is preferably 90% by mass or less, more preferably 85% by mass or less, still more preferably 80% by mass or less. When the SBR content is within the range indicated above, the advantageous effect tends to be better achieved.

Any BR may be used, and examples include high-cis BR having a high cis content, BR containing syndiotactic polybutadiene crystals, and BR synthesized using rare earth catalysts (rare earth-catalyzed BR). These may be used alone or in combinations of two or more. In particular, high-cis BR having a cis content of 90% by mass or higher is preferred in order to improve abrasion resistance.

The BR may be either unmodified or modified BR. Examples of the modified BR include those into which functional groups as listed for the modified diene rubber are introduced.

When the elastomer composition contains BR, the BR content based on 100% by mass of the elastomer components is preferably 5% by mass or more, more preferably 10% by mass or more, still more preferably 15% by mass or more, particularly preferably 20% by mass or more. The upper limit is preferably 60% by mass or less, more preferably 40% by mass or less, still more preferably 30% by mass or less. When the BR content is within the range indicated above, the advantageous effect tends to be better achieved.

The BR may be commercially available from Ube Industries, Ltd., JSR Corporation, Asahi Kasei Corporation, Zeon Corporation, etc.

Examples of the isoprene-based rubber include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

When the elastomer composition contains an isoprene-based rubber, the isoprene-based rubber content based on 100% by mass of the elastomer components is preferably 5% by mass or more, more preferably 10% by mass or more, still more preferably 15% by mass or more, particularly preferably 20% by mass or more. The upper limit is preferably 60% by mass or less, more preferably 40% by mass or less, still more preferably 30% by mass or less. When the isoprene-based rubber content is within the range indicated above, the advantageous effect tends to be better achieved.

### (Filler)

The elastomer composition contains silica and carbon black as fillers. Other usable fillers such as materials known in the rubber field may also be used. Examples include inorganic fillers such as calcium carbonate, talc, alumina, clay, aluminum hydroxide, aluminum oxide, and mica; and poorly dispersible fillers.
(i) When Ash + BC > PC, the filler content (the total amount of fillers) per 100 parts by mass of the elastomer components in the elastomer composition is preferably 80 parts by mass or more, more preferably 100 parts by mass or more, still more preferably 115 parts by mass or more, particularly preferably 125 parts by mass or more, most preferably 135 parts by mass or more. The upper limit is preferably 200 parts by mass or less, more preferably 170 parts by mass or less, still more preferably 150 parts by mass or less. When the filler content is within the range indicated above, the advantageous effect tends to be better achieved.
(ii) When Ash + BC ≤ PC, the filler content (the total amount of fillers) per 100 parts by mass of the elastomer components in the elastomer composition is preferably 30 parts by mass or more, more preferably 50 parts by mass or more, still more preferably 75 parts by mass or more. The lower limit may be 85 parts by mass or more or 95 parts by mass or more. The upper limit is preferably 150 parts by mass or less, more preferably 120 parts by mass or less, still more preferably 110 parts by mass or less, particularly preferably 105 parts by mass or less. When the filler content is within the range indicated above, the advantageous effect tends to be better achieved.

Examples of usable silica include dry silica (anhydrous silica) and wet silica (hydrous silica). Wet silica is preferred among these because it contains a large number of silanol groups. The silica may be commercially available from Degussa, Rhodia, Tosoh Silica Corporation, Solvay Japan, Tokuyama Corporation, etc.

The nitrogen adsorption specific surface area (N₂SA) of the silica is preferably 70 m²/g or more, more preferably 140 m²/g or more, still more preferably 160 m²/g or more, particularly preferably 180 m²/g or more. Moreover, the upper limit of the N₂SA of the silica is not limited, but is preferably 300 m²/g or less, more preferably 250 m²/g or less, still more preferably 230 m²/g or less. When the N₂SA is within the range indicated above, the advantageous effect tends to be better achieved. In particular, the use of a silica having a N₂SA of 180 m²/g or more can significantly (synergistically) improve abrasion resistance on a wet road surface. This is believed to be because, in spite of the fact that it is generally difficult to ensure dispersion of such fine particle silica, the effect of improving silica dispersion caused by the functionalized resin incorporated is increased.

The N₂SA of the silica is determined by a BET method in accordance with ASTM D3037-93.
(i) When Ash + BC > PC, the silica content per 100 parts by mass of the elastomer components in the elastomer composition is preferably 80 parts by mass or more, more preferably 100 parts by mass or more, still more preferably 110 parts by mass or more, particularly preferably 120 parts by mass or more, most preferably 130 parts by mass or more. The upper limit is preferably 200 parts by mass or less, more preferably 170 parts by mass or less, still more preferably 150 parts by mass or less. When the silica content is within the range indicated above, the advantageous effect tends to be better achieved.
(ii) When Ash + BC ≤ PC, the silica content per 100 parts by mass of the elastomer components in the elastomer composition is preferably 30 parts by mass or more, more preferably 50 parts by mass or more, still more preferably 70 parts by mass or more, particularly preferably 80 parts by mass or more, most preferably 90 parts by mass or more. The upper limit is preferably 150 parts by mass or less, more preferably 120 parts by mass or less, still more preferably 110 parts by mass or less, particularly preferably 100 parts by mass or less. When the silica content is within the range indicated above, the advantageous effect tends to be better achieved.

The elastomer composition containing silica may contain a silane coupling agent together with the silica.

Any silane coupling agent conventionally used with silica in the rubber industry may be used. Non-limiting examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more. Sulfide or mercapto silane coupling agents are preferred among these.

The elastomer composition may contain no silane coupling agent. Even without any silane coupling agent, the advantageous effect can be well achieved by the effect of the functionalized resin described later. When the elastomer composition contains a silane coupling agent, the silane coupling agent content per 100 parts by mass of the silica is preferably 3 parts by mass or more, more preferably 6 parts by mass or more. The silane coupling agent content is also preferably 20 parts by mass or less, more preferably 15 parts by mass or less. When the silane coupling agent content is within the range indicated above, the advantageous effect tends to be better achieved.

Examples of usable carbon black include N134, N110, N220, N234, N219, N339, N330, N326, N351, N550, and N762. These may be used alone or in combinations of two or more. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc.

The nitrogen adsorption specific surface area (N₂SA) of the carbon black is preferably 50 m²/g or more, more preferably 80 m²/g or more, still more preferably 100 m²/g or more. The N₂SA is also preferably 200 m²/g or less, more preferably 150 m²/g or less, still more preferably 130 m²/g or less. When the N₂SA is within the range indicated above, the advantageous effect tends to be better achieved.

The nitrogen adsorption specific surface area of the carbon black is determined in accordance with JIS K6217-2:2001.

The carbon black content per 100 parts by mass of the elastomer components in the elastomer composition is preferably 1 part by mass or more, more preferably 3 parts by mass or more, still more preferably 5 parts by mass or more. The upper limit is preferably 30 parts by mass or less, more preferably 20 parts by mass or less, still more preferably 10 parts by mass or less. When the carbon black content is within the range indicated above, the advantageous effect tends to be better achieved.

### (Plasticizer)

The elastomer composition contains a functionalized resin having a functional group containing at least one element selected from the group consisting of oxygen, silicone, and nitrogen as a plasticizer. Herein, the term "plasticizer" refers to a material which can impart plasticity to elastomer components.

Examples of the functional group containing at least one element selected from the group consisting of oxygen, silicone, and nitrogen include the above-mentioned functional groups which contain at least one element selected from the group consisting of oxygen, silicon, and nitrogen, as well as other known functional groups containing the above element. From the standpoint of overall performance in terms of fuel economy, abrasion resistance on a wet road surface, and wet grip performance, groups represented by -Si(R)₃ (wherein Rs are the same or different and each represent a hydrogen atom, an organic element-containing group, an inorganic element-containing group, an organic element- and inorganic element-containing group, or the like) are preferred among these.

The functionalized resin can be prepared by known methods, including for example a slurry method and a metathesis method. Specifically, for example, the functionalized resin may be prepared by reacting in a known manner a polymer serving as the polymer backbone of the functionalized resin with a functional compound capable of introducing a functional group containing at least one element selected from the group consisting of oxygen, silicon, and nitrogen.

The polymer serving as the polymer backbone may be any polymer that can form the backbone. Examples include liquid resins (polymers that are liquid at 25°C) and solid resins (polymers that are solid at 25°C). Solid resins are preferred among these. These polymers may be used alone or in combinations of two or more.

Any liquid resin may be used, and examples include liquid aromatic vinyl polymers, coumarone-indene resins, indene resins, terpene resins, rosin resins, and hydrogenated products thereof. These may be used alone or in combinations of two or more. From the standpoint of overall performance in terms of fuel economy, abrasion resistance on a wet road surface, and wet grip performance, liquid aromatic vinyl polymers are preferred among these.

Examples of the liquid aromatic vinyl polymers include resins produced by polymerization of α-methylstyrene and/or styrene. Specific examples include liquid resins such as styrene homopolymers, α-methylstyrene homopolymers, and copolymers of α-methylstyrene and styrene.

Examples of the liquid coumarone-indene resins include resins that contain coumarone and indene as the main monomer components forming the backbone (main chain) of the resins. Examples of monomer components which may be contained in the backbone in addition to coumarone and indene include styrene, α-methylstyrene, methylindene, and vinyltoluene.

Examples of the liquid indene resins include liquid resins that contain indene as the main monomer component forming the backbone (main chain) of the resins.

Examples of the liquid terpene resins include liquid terpene-based resins typified by resins produced by polymerization of terpene compounds such as α-pinene, β-pinene, camphene, or dipentene, and terpenephenol resins produced from terpene compounds and phenolic compounds.

Examples of the liquid rosin resins include liquid rosin-based resins typified by natural rosins, polymerized rosins, modified rosins, and esterified or hydrogenated products thereof.

Any solid resin (resin that is solid at 25°C) may be used, and examples include solid styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These may be used alone or in combinations of two or more. From the standpoint of overall performance in terms of fuel economy, abrasion resistance on a wet road surface, and wet grip performance, solid styrene resins are preferred among these.

The term "solid styrene resins" refers to solid polymers produced from styrenic monomers as structural monomers, and examples include polymers produced by polymerization of styrenic monomers as main components (at least 50% by mass). Specific examples include homopolymers produced by polymerization of single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, or p-chlorostyrene), copolymers produced by copolymerization of two or more styrenic monomers, and copolymers of styrenic monomers and additional monomers copolymerizable therewith. Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride.

Examples of the solid coumarone-indene resins include solid resins having structural units as described for the liquid coumarone-indene resins above.

Examples of the solid terpene resins include polyterpene, terpene phenol, and aromatic modified terpene resins. Examples of the solid polyterpene resins include solid terpene resins made from terpene compounds, such as α-pinene resins, β-pinene resins, limonene resins, dipentene resins, and β-pinene-limonene resins, as well as solid hydrogenated terpene resins obtained by hydrogenation of these terpene resins. Examples of the solid terpene phenol resins include solid resins produced by copolymerization of terpene compounds and phenolic compounds, and solid resins obtained by hydrogenation of these resins. Specific examples include solid resins produced by condensation of terpene compounds, phenolic compounds, and formaldehyde. Examples of the solid aromatic modified terpene resins include solid resins obtained by modification of terpene resins with aromatic compounds, and solid resins obtained by hydrogenation of these resins.

Examples of the solid p-t-butylphenol acetylene resins include solid resins produced by condensation of p-t-butylphenol and acetylene.

Non-limiting examples of the solid acrylic resins include solvent-free solid acrylic resins. Examples of the monomer components of the solid acrylic resins include (meth)acrylic acids and (meth)acrylic acid derivatives such as (meth)acrylic acid esters (e.g., alkyl esters, aryl esters, and aralkyl esters), (meth)acrylamides, and (meth)acrylamide derivatives. In addition to the (meth)acrylic acids or (meth)acrylic acid derivatives, aromatic vinyls, such as styrene, α-methylstyrene, vinyltoluene, vinylnaphthalene, divinylbenzene, trivinylbenzene, or divinylnaphthalene, may also be used as the monomer components of the solid acrylic resins. The solid acrylic resins may be formed only of (meth)acrylic components or may further contain constituent components other than the (meth)acrylic components. Moreover, the solid acrylic resins may contain a hydroxy group, a carboxyl group, a silanol group, or other groups.

The softening point of the solid resins forming the polymer backbone is preferably 160°C or lower, more preferably 130°C or lower, still more preferably 110°C or lower, particularly preferably 96°C or lower. The lower limit is preferably 60°C or higher, more preferably 70°C or higher, still more preferably 80°C or higher, particularly preferably 85°C or higher. When the softening point is within the range indicated above, the advantageous effect tends to be better achieved.

Herein, the softening point of the solid resins is determined in accordance with JIS K 6220-1:2001 using a ring and ball softening point measuring apparatus and defined as the temperature at which the ball drops down.

The above-mentioned functional compound may be any compound capable of introducing a functional group containing at least one element selected from the group consisting of oxygen, silicon, and nitrogen. From the standpoint of overall performance in terms of fuel economy, abrasion resistance on a wet road surface, and wet grip performance, it is preferably a compound capable of introducing a silicon-containing functional group, among others.

Suitable examples of the functional compound include compounds represented by the following formula: 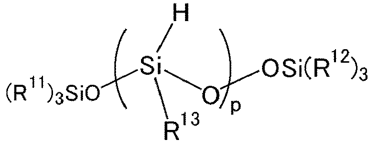 wherein p represents an integer of 1 to 1000; each of R¹¹ and R¹² is the same or different and represents an optionally substituted monovalent hydrocarbon group; and each R¹³ is the same or different and represents an optionally substituted monovalent hydrocarbon group.

The symbol p is preferably 5 or more, more preferably 10 or more, still more preferably 20 or more, but is preferably 800 or less, more preferably 700 or less, still more preferably 600 or less.

The optionally substituted monovalent hydrocarbon group as R¹¹, R¹², or R¹³ preferably has 1 to 20 carbon atoms. The number of carbon atoms is more preferably 2 or more, but is more preferably 14 or less, still more preferably 12 or less. Examples of the optionally substituted monovalent hydrocarbon group include substituted or unsubstituted alkyl and alkenyl groups. Examples of the alkyl groups include methyl, ethyl, n-propyl, isopropyl, n-butyl, sec-butyl, tert-butyl, phenyl, and fluoroalkane groups. Examples of the alkenyl groups include vinyl, allyl, 1-propenyl, and 1-methylethenyl groups.

Other suitable examples of the functional compound include compounds represented by the following formula: 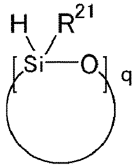 wherein q represents an integer of 2 to 40, and R²¹s are the same or different and each represent an optionally substituted monovalent hydrocarbon group.

The symbol q is preferably 3 or more, more preferably 4 or more, still more preferably 5 or more, but is preferably 38 or less, more preferably 36 or less, still more preferably 35 or less.

The optionally substituted monovalent hydrocarbon group as R²¹ preferably has 1 to 20 carbon atoms. The number of carbon atoms is more preferably 2 or more, but is more preferably 14 or less, still more preferably 12 or less. Specific examples of R²¹ include those as described for the optionally substituted monovalent hydrocarbon group as R¹¹, R¹², or R¹³.

Still other suitable examples of the functional compound include compounds represented by the following formula: 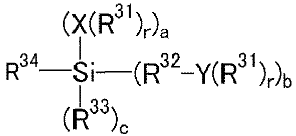 wherein Xs are the same or different and each represent a nitrogen atom, an oxygen atom, or a sulfur atom;
Ys are the same or different and each represent a boron atom, a nitrogen atom, an oxygen atom, a silicon atom, or a sulfur atom;
each R³¹ is the same or different and represents a hydrogen atom or an optionally substituted monovalent hydrocarbon group;
each R³² is the same or different and represents an optionally substituted divalent hydrocarbon group;
R³³s are the same or different and each represent a hydrogen atom, a halogen atom, a sulfonate group, or an optionally substituted monovalent hydrocarbon group;
R³¹, R³², and R³³ may together form a monocyclic ring or a polycyclic ring;
R³⁴ represents an optionally substituted monovalent hydrocarbon group;
a, b, and c are the same or different and represent integers, provided that a + b + c = 3;
each of X and Y is the same or different, and when Y is a boron atom, r = 2; when X or Y is a nitrogen atom, r = 2; when X or Y is an oxygen atom or a sulfur atom, r = 1; and when Y is a silicon atom, r = 3.

Xs are the same or different and each represent a nitrogen atom, an oxygen atom, or a sulfur atom, preferably an oxygen atom.

Ys are the same or different and each represent a boron atom, a nitrogen atom, an oxygen atom, a silicon atom, or a sulfur atom, preferably an oxygen atom.

The optionally substituted monovalent hydrocarbon group as R³¹, R³³, or R³⁴ preferably has 1 to 20 carbon atoms. The number of carbon atoms is more preferably 2 or more, but is more preferably 14 or less, still more preferably 12 or less. Specific examples of R³¹, R³³, or R³⁴ include those as described for the optionally substituted monovalent hydrocarbon group as R¹¹, R¹², or R¹³.

The optionally substituted divalent hydrocarbon group as R³² preferably has 1 to 20 carbon atoms. The number of carbon atoms is more preferably 2 or more, but is more preferably 14 or less, still more preferably 12 or less. Examples of the optionally substituted divalent hydrocarbon group include substituted or unsubstituted alkylene and arylene groups. Examples of the alkylene groups include methylene, ethylene, and trimethylene groups. Examples of the arylene groups include phenylene, naphthylene, and biphenylene groups.

The symbols a, b, and c are the same or different and each represent an integer of 0 to 3, provided that a + b + c = 3.

Still other suitable examples of the functional compound include compounds represented by the following formula: 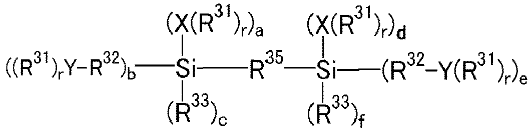 wherein Xs are the same or different and each represent a nitrogen atom, an oxygen atom, or a sulfur atom;
Ys are the same or different and each represent a boron atom, a nitrogen atom, an oxygen atom, a silicon atom, or a sulfur atom;
each R³¹ is the same or different and represents a hydrogen atom or an optionally substituted monovalent hydrocarbon group;
each R³² is the same or different and represents an optionally substituted divalent hydrocarbon group;
R³³s are the same or different and each represent a hydrogen atom, a halogen atom, a sulfonate group, or an optionally substituted monovalent hydrocarbon group;
R³¹, R³², and R³³ may together form a monocyclic ring or a polycyclic ring;
R³⁵ represents an optionally substituted divalent hydrocarbon group;
a, b, and c are the same or different and represent integers, provided that a + b + c = 3;
d, e, and f are the same or different and represent integers, provided that d + e + f = 3;
each of X and Y is the same or different, and when Y is a boron atom, r = 2; when X or Y is a nitrogen atom, r = 2; when X or Y is an oxygen atom or a sulfur atom, r = 1; and when Y is a silicon atom, r = 3.

Xs are the same or different and each represent a nitrogen atom, an oxygen atom, or a sulfur atom, preferably an oxygen atom.

Ys are the same or different and each represent a boron atom, a nitrogen atom, an oxygen atom, a silicon atom, or a sulfur atom, preferably an oxygen atom.

The optionally substituted monovalent hydrocarbon group as R³¹ or R³³ preferably has 1 to 20 carbon atoms. The number of carbon atoms is more preferably 2 or more, but is more preferably 14 or less, still more preferably 12 or less. Specific examples of R³¹ or R³³ include those as described for the optionally substituted monovalent hydrocarbon group as R¹¹, R¹², or R¹³.

The optionally substituted divalent hydrocarbon group as R³² or R³⁵ preferably has 1 to 20 carbon atoms. The number of carbon atoms is more preferably 2 or more, but is more preferably 14 or less, still more preferably 12 or less. Specific examples of R³² or R³⁵ include those as described for the optionally substituted divalent hydrocarbon group as R³² above.

The symbols a, b, and c are the same or different and each represent an integer of 0 to 3, provided that a + b + c = 3.

The symbols d, e, and f are the same or different and each represent an integer of 0 to 3, provided that d + e + f = 3.

Specific examples of the functional compound include vinyltrimethoxysilane, vinylmethyldimethoxysilane, vinyldimethylmethoxysilane, vinyltriethoxysilane, vinylmethyldiethoxysilane, vinyldimethylethoxysilane, allyltrimethoxysilane, allylmethyldimethoxysilane, allyldimethylmethoxysilane, allyltriethoxysilane, allylmethyldiethoxysilane, allyldimethylethoxysilane, hexenyltrimethoxysilane, hexenylmethyldimethoxysilane, hexenyldimethylmethoxysilane, hexenyltriethoxysilane, hexenylmethyldiethoxysilane, hexenyldimethylethoxysilane, octenyltrimethoxysilane, octenylmethyldimethoxysilane, octenyldimethylmethoxysilane, octenyltriethoxysilane, octenylmethyldiethoxysilane, octenyldimethylethoxysilane, norbornenylethyltrimethoxysilane, norbornenylethylmethyldimethoxysilane, norbornenylethyldimethylmethoxysilane, norbornenylethyltriethoxysilane, norbornenylethylmethyldiethoxysilane, norbornenylethyldimethylethoxysilane, (meth)acryloxypropyltrimethoxysilane, (meth)acryloxypropylmethyldimethoxysilane, (meth)acryloxypropyldimethylmethoxysilane, (meth)acryloxypropyltriethoxysilane, (meth)acryloxypropylmethyldiethoxysilane, (meth)acryloxypropyldimethylethoxysilane, (meth)acryloxytrimethoxysilane, (meth)acryloxymethylmethyldimethoxysilane, (meth)acryloxymethyldimethylmethoxysilane, (meth)acryloxymethyltriethoxysilane, (meth)acryloxymethylmethyldiethoxysilane, (meth)acryloxymethyldimethylethoxysilane, (meth)acryloxyoctyltrimethoxysilane, (meth)acryloxyoctylmethyldimethoxysilane, (meth)acryloxyoctyldimethylmethoxysilane, (meth)acryloxyoctyltriethoxysilane, (meth)acryloxyoctylmethyldiethoxysilane, and (meth)acryloxyoctyldimethylethoxysilane. For easy availability, examples include vinyltrimethoxysilane, vinyltriethoxysilane, and (meth)acryloxypropyltrimethoxysilane. Allyltriethoxysilane is preferred among these.

The functionalized resin content per 100 parts by mass of the elastomer components in the elastomer composition is preferably 3 parts by mass or more, more preferably 5 parts by mass or more, still more preferably 7 parts by mass or more, particularly preferably 10 parts by mass or more. The upper limit is preferably 35 parts by mass or less, more preferably 30 parts by mass or less, still more preferably 25 parts by mass or less, particularly preferably 20 parts by mass or less. When the functionalized resin content is within the range indicated above, the advantageous effect tends to be better achieved.

The elastomer composition may additionally contain plasticizers other than the functionalized resins. Non-limiting examples of such additional plasticizers include liquid plasticizers which have plasticity and are liquid at 25°C, such as oils and the above-described liquid resins, and solid plasticizers which have plasticity and are solid at 25°C, such as the above-described solid resins. These plasticizers may be used alone or in combinations of two or more.
(i) When Ash + BC > PC, the plasticizer content (the combined amount of functionalized resins, liquid plasticizers such as oils and liquid resins other than functionalized resins, and solid plasticizers such as solid resins other than functionalized resins) per 100 parts by mass of the elastomer components in the elastomer composition is preferably 10 parts by mass or more, more preferably 30 parts by mass or more, still more preferably 40 parts by mass or more, particularly preferably 50 parts by mass or more. The plasticizer content is also preferably 100 parts by mass or less, more preferably 80 parts by mass or less, still more preferably 60 parts by mass or less. When the plasticizer content is within the range indicated above, the advantageous effect tends to be better achieved.
(ii) When Ash + BC ≤ PC, the plasticizer content (the combined amount of functionalized resins, liquid plasticizers such as oils and liquid resins other than functionalized resins, and solid plasticizers such as solid resins other than functionalized resins) per 100 parts by mass of the elastomer components in the elastomer composition is preferably 3 parts by mass or more, more preferably 7 parts by mass or more, still more preferably 10 parts by mass or more. The plasticizer content is also preferably 50 parts by mass or less, more preferably 40 parts by mass or less, still more preferably 30 parts by mass or less, particularly preferably 20 parts by mass or less. When the plasticizer content is within the range indicated above, the advantageous effect tends to be better achieved.

Non-limiting examples of the oils among the liquid plasticizers include conventional oils, including, for example: process oils such as paraffinic process oils, aromatic process oils, and naphthenic process oils; low polycyclic aromatic (PCA) process oils such as TDAE and MES; plant oils; and mixtures thereof. From the standpoints of abrasion resistance and fracture properties, aromatic process oils are preferred among these. Specific examples of the aromatic process oils include Diana Process Oil AH series available from Idemitsu Kosan Co., Ltd.

Examples of the liquid resins among the liquid plasticizers include those described above.
(i) When Ash + BC > PC, the liquid plasticizer content (the total amount of liquid plasticizers such as functionalized resins that are liquid at 25°C, oils, and liquid resins other than functionalized resins) per 100 parts by mass of the elastomer components in the elastomer composition is preferably 10 parts by mass or more, more preferably 20 parts by mass or more, still more preferably 30 parts by mass or more, particularly preferably 40 parts by mass or more. The liquid plasticizer content is also preferably 90 parts by mass or less, more preferably 60 parts by mass or less, still more preferably 50 parts by mass or less. When the liquid plasticizer content is within the range indicated above, the advantageous effect tends to be better achieved. Moreover, the oil content is also desirably within the range as indicated above.
(ii) When Ash + BC ≤ PC, the liquid plasticizer content (the total amount of liquid plasticizers such as functionalized resins that are liquid at 25°C, oils, and liquid resins other than functionalized resins) per 100 parts by mass of the elastomer components in the elastomer composition is preferably 30 parts by mass or less, more preferably 20 parts by mass or less, still more preferably 10 parts by mass or less, particularly preferably 5 parts by mass or less, and may be 0 parts by mass. When the liquid plasticizer content is within the range indicated above, the advantageous effect tends to be better achieved. Moreover, the oil content is also desirably within the range as indicated above.

Examples of the solid resins among the solid plasticizers include those described above.

The solid plasticizer content (the total amount of solid plasticizers such as functionalized resins that are solid at 25°C, and solid resins other than functionalized resins) per 100 parts by mass of the elastomer components in the elastomer composition is preferably 3 parts by mass or more, more preferably 5 parts by mass or more, still more preferably 7 parts by mass or more, particularly preferably 10 parts by mass or more. The upper limit is preferably 35 parts by mass or less, more preferably 30 parts by mass or less, still more preferably 25 parts by mass or less, particularly preferably 20 parts by mass or less. When the solid plasticizer content is within the range indicated above, the advantageous effect tends to be better achieved.

The liquid and solid plasticizers may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., H&R, etc.

### (Other components)

From the standpoint of properties such as crack resistance and ozone resistance, the elastomer composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Among these, p-phenylenediamine or quinoline antioxidants are preferred, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The antioxidant content per 100 parts by mass of the elastomer components is preferably 0.2 parts by mass or more, more preferably 0.5 parts by mass or more. When the antioxidant content is not less than the lower limit, sufficient ozone resistance tends to be obtained. The antioxidant content is preferably 7.0 parts by mass or less, more preferably 4.0 parts by mass or less. When the antioxidant content is not more than the upper limit, a good appearance tends to be obtained.

The elastomer composition may contain stearic acid. The stearic acid content per 100 parts by mass of the elastomer components is preferably 0.5 to 10 parts by mass, more preferably 0.5 to 5 parts by mass.

The stearic acid may be a conventional one, e.g., available from NOF Corporation, Kao Corporation, FUJIFILM Wako Pure Chemical Corporation, or Chiba Fatty Acid Co., Ltd.

The elastomer composition preferably contains zinc oxide. The zinc oxide content per 100 parts by mass of the elastomer components is preferably 0.5 to 10 parts by mass, more preferably 1 to 5 parts by mass.

The zinc oxide may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The elastomer composition may contain a wax. The wax content per 100 parts by mass of the elastomer components is preferably 0.5 to 10 parts by mass, more preferably 1 to 5 parts by mass.

Any wax may be used, and examples include petroleum waxes, natural waxes, and synthetic waxes produced by purifying or chemically treating a plurality of waxes. These waxes may be used alone or in combinations of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Usable commercial products are available from Ouchi Shinko Chemical Industrial Co., Ltd., Nippon Seiro Co., Ltd., Seiko Chemical Co., Ltd., etc. Moreover, the wax content may be selected appropriately in view of ozone resistance and cost.

The elastomer composition may contain sulfur in order to moderately crosslink the polymer chains and provide a good balance between the properties.

The sulfur content per 100 parts by mass of the elastomer components is preferably 0.1 parts by mass or more, more preferably 0.5 parts by mass or more, still more preferably 0.7 parts by mass or more, particularly preferably 1.5 parts by mass or more. The sulfur content is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The elastomer composition may contain a vulcanization accelerator.

The vulcanization accelerator content is not limited and may be freely selected according to the desired cure rate or crosslink density, but it is usually 0.3 to 10 parts by mass, preferably 0.5 to 7 parts by mass per 100 parts by mass of the elastomer components.

Any type of vulcanization accelerator may be used, including usual ones. Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. From the standpoint of the balance of the properties, sulfenamide and/or guanidine vulcanization accelerators are preferred among these.

The elastomer composition may contain any appropriate additive usually used in the application field, such as release agents and pigments, in addition to the above-mentioned components.

The elastomer composition may be prepared by known methods. For example, it may be prepared by kneading the components in a rubber kneading machine such as an open roll mill or a Banbury mixer, optionally followed by crosslinking. With regard to the kneading conditions, the kneading temperature is usually 50 to 200°C, preferably 80 to 190°C, and the kneading time is usually 30 seconds to 30 minutes, preferably one minute to 30 minutes.

The elastomer composition may be used in any tire component, suitably a tread (cap tread).

The elastomer composition is suitable for use in a tire. The tire may be, for example, a pneumatic tire or a non-pneumatic tire, preferably a pneumatic tire. In particular, it is suitable for use as a summer tire or a winter tire (e.g., a studless winter tire, snow tire, cold weather tire, or studded tire). The tire may be used as a tire for passenger vehicles, large passenger vehicles, large SUVs, heavy duty vehicles such as trucks and buses, light trucks, or motorcycles, or as a racing tire (high performance tire), for example.

The tire can be produced from the elastomer composition by usual methods. For example, the unvulcanized elastomer composition containing various materials may be extruded into the shape of a tire component and then assembled with other tire components in a usual manner on a tire building machine to build an unvulcanized tire, which may then be heated and pressurized in a vulcanizer to produce a tire.

An example of the tire is a tire which includes a rubber layer 1 including the elastomer composition, and a rubber layer 2 radially inwardly adjacent to the rubber layer 1, and in which the rubber layer 1 and the rubber layer 2 have a difference in acetone extractable content (AE) within 10% by mass. Such a tire has excellent overall performance in terms of fuel economy, abrasion resistance on a wet road surface, and wet grip performance.

The mechanism for this advantageous effect is not clear, but is believed to be as follows.

The plasticizers tend to migrate to the adjacent components during running of the tire, and since this migration does not occur uniformly, the hardness distribution tends to be biased. If there is a distribution which is locally hard due to aggregation of the silica particles and locally soft due to aggregation of the resin molecules, further migration may promote the distribution bias, and the plasticizers greatly contribute to the hardness especially under low temperature conditions (wet conditions). To overcome this problem, it is believed that by reducing the difference in acetone extractable content (AE), the effect of reducing friction on a wet road surface is further increased, so that the overall performance in terms of fuel economy, abrasion resistance on a wet road surface, and wet grip performance can be further significantly (synergistically) improved.

An exemplary tire is described with reference to Fig. 1.

In Fig. 1, the vertical direction corresponds to the radial direction of a tire 2, the horizontal direction corresponds to the axial direction of the tire 2, and the direction perpendicular to the paper corresponds to the circumferential direction of the tire 2. A tread 4 includes a cap layer 30 and a base layer 28. Preferably, the cap layer 30 includes the above-described elastomer composition. In this case, the radially inwardly adjacent rubber layer of the tire 2 is the base layer 28, and preferably the cap layer 30 (rubber layer 1) and the base layer 28 (rubber layer 2) have a difference in acetone extractable content (AE) within 10% by mass. The difference in AE is preferably as small as possible and is more preferably within 5% by mass, still more preferably within 3% by mass, particularly preferably within 1% by mass, and may be 0% by mass.

Although the example shown in Fig. 1 is a two-layer tread 4 including a cap layer 30 and a base layer 28, the tread may be a single-layer tread 4 or a three or more layer tread in each of which the outermost layer contacting the road surface desirably includes the elastomer composition.

In the tire 2, each sidewall 6 extends substantially inwardly in the radial direction from the end of the tread 4. The radially outer portion of the sidewall 6 is bonded to the tread 4. The radially inner portion of the sidewall 6 is bonded to a clinch 10. The sidewall 6 includes a crosslinked rubber having excellent cut resistance and weather resistance. The sidewall 6 prevents damages to a carcass 14.

Each wing 8 is located between the tread 4 and the sidewall 6. The wing 8 is bonded to each of the tread 4 and the sidewall 6. The wing 8 includes a crosslinked rubber having excellent adhesion.

Each clinch 10 is located substantially radially inward of the sidewall 6. The clinch 10 is located outward from a bead 12 and the carcass 14, as viewed in the axial direction. The clinch 10 includes a crosslinked rubber having excellent abrasion resistance.

Each bead 12 is located axially inward of the clinch 10. The bead 12 includes a core 32 and an apex 34 that radially outwardly extends from the core 32. The core 32 has a ring shape and contains a wound non-stretchable wire. The material of the wire is typically steel. The apex 34 is radially outwardly tapered. The apex 34 includes a very hard crosslinked rubber.

The carcass 14 includes a carcass ply 36. In the present tire 2, the carcass 14 consists of one carcass ply 36. This can achieve weight reduction.

In the present tire 2, the carcass ply 36 extends between the beads 12 on opposite sides along the tread 4 and the sidewalls 6. The carcass ply 36 is folded around each core 32 from the inside to the outside in the axial direction. The thus folded carcass ply 36 is provided with a main portion 36a and a pair of folded portions 36b. Namely, the carcass ply 36 includes a main portion 36a and a pair of folded portions 36b.

Though not shown, the carcass ply 36 is formed of a large number of parallel cords and a topping rubber. The absolute value of the angle of each cord to the equatorial plane is suitably from 75° to 90°. In other words, such a carcass 14 preferably has a radial structure. The cords include organic fibers. Preferred examples of the organic fibers include polyester fibers, nylon fibers, rayon fibers, polyethylene naphthalate fibers, and aramid fibers.

A belt 16 is located radially inward of the tread 4. The belt 16 is stacked on the carcass 14. The belt 16 reinforces the carcass 14. The belt 16 includes an interior layer 38 and an exterior layer 40. As is clear from Fig. 1, the interior layer 38 is slightly wider in the axial direction than the exterior layer 40. In the present tire 2, the axial width of the belt 16 is preferably at least 0.6 times but not more than 0.9 times the cross-sectional width (see JATMA) of the tire 2.

Though not shown, the interior layer 38 and the exterior layer 40 are each formed of a large number of parallel cords and a topping rubber. In other words, the belt 16 contains a large number of parallel cords. Each cord is tilted relative to the equatorial plane. The absolute value of the tilt angle is generally at least 10° but not greater than 35°. The tilt direction of the cords in the interior layer 38 relative to the equatorial plane is opposite to the tilt direction of the cords in the exterior layer 40 relative to the equatorial plane. The material of the cords is preferably steel. The cords may include organic fibers. In this case, examples of the organic fibers include polyester fibers, nylon fibers, rayon fibers, polyethylene naphthalate fibers, and aramid fibers.

A band 18 is located radially outward of the belt 16. The band 18 has a width in the axial direction that is equal to the width of the belt 16. The band 18 may be wider than the belt 16.

Though not shown, the band 18 includes cords and a topping rubber. The cords are spirally wound. Such a band 18 has what is called a jointless structure. The cords extend substantially in the circumferential direction. The angle of the cords to the circumferential direction is 5° or smaller or even 2° or smaller. The cords restrict the belt 16, thereby inhibiting lifting of the belt 16. The cords include organic fibers. Preferred examples of the organic fibers include nylon fibers, polyester fibers, rayon fibers, polyethylene naphthalate fibers, and aramid fibers.

The belt 16 and the band 18 form a reinforcement layer. The reinforcement layer may be formed only of the belt 16.

An innerliner 20 is located inward of the carcass 14. The innerliner 20 is bonded to the inner surface of the carcass 14. The innerliner 20 includes a crosslinked rubber having excellent air retention properties. The base material rubber of the innerliner 20 is typically butyl rubber or halogenated butyl rubber. The innerliner 20 maintains the internal pressure of the tire 2.

Each chafer 22 is located near the bead 12. In the present embodiment, the chafer 22 includes a fabric and a rubber impregnated in the fabric. The chafer 22 may be integrated with the clinch 10. In this case, the chafer 22 and the clinch 10 are made of the same material.

In the present tire 2, the grooves 26 of the tread 4 include main grooves 42. As shown in Fig. 1, the tread 4 has a plurality of, specifically three, main grooves 42 engraved thereon. The main grooves 42 are provided at intervals in the axial direction. Four ribs 44 extending in the circumferential direction are defined by the three main grooves 42 engraved on the present tread 4. In other words, each main groove 42 is between one rib 44 and another rib 44.

The main grooves 42 extend in the circumferential direction. The main grooves 42 are continuous in the circumferential direction without interruption. For example, the main grooves 42 promote draining of water present between the road surface and the tire 2 in rainy weather. Thus, the tire 2 can sufficiently contact the road surface even when the road surface is wet. The main grooves 42 contribute to wet grip of the tire 2.

The tire preferably includes a tread having a negative ratio of 50% or lower.

The negative ratio of the tread is preferably 40% or lower, more preferably 35% or lower, still more preferably 30% or lower. The negative ratio is preferably 5% or higher, more preferably 10% or higher, still more preferably 15% or higher. When the negative ratio is within the range indicated above, the advantageous effect tends to be better achieved.

The term "negative ratio" (negative ratio within the ground contact surface of the tread portion) refers to the ratio of the total groove area within the ground contact surface relative to the total area of the ground contact surface.

The mechanism for this advantageous effect is not clear, but is believed to be as follows.

A larger groove area results in a smaller ground contact area and a larger movement of the rubber blocks of the tread surface in contact with the road surface, which may cause aggregation of the resin molecules or silica particles. Additionally, the aggregates that have been present since the production may cause cracking or wear. However, it is believed that by adjusting the negative ratio to 50% or lower, such a problem can be prevented, so that the overall performance in terms of fuel economy, abrasion resistance on a wet road surface, and wet grip performance can be significantly (synergistically) improved.

### EXAMPLES

The present disclosure will be specifically described with reference to, but not limited to, examples.

The chemicals used in the examples and comparative examples are listed below.
NR: TSR20
SBR: NS616 (non-oil extended SBR, styrene content: 21% by mass, vinyl content: 66 mol%, Tg: -23°C, Mw: 240,000) available from Zeon Corporation
BR: BR150B (cis content: 97% by mass) available from Ube Industries, Ltd.
Carbon black: DIABLACK I (N220, N₂SA: 114 m²/g, DBP: 114 mL/100g) available from Mitsubishi Chemical Corporation
Silica 1: Ultrasil VN3 (N₂SA: 175 m²/g) available from Evonik Degussa
Silica 2: Zeosil Premium 200MP (N₂SA: 220 m²/g) available from Rhodia
Solid resin: SYLVARES SA85 (a copolymer of α-methylstyrene and styrene, softening point: 85°C) available from Arizona Chemical
Oil: VIVATEC 400/500 (TDAE oil) available from H&R
Functionalized resin 1: the product of Synthesis Example 1 below
Functionalized resin 2: the product of Synthesis Example 2 below
Wax: Ozoace 0355 available from Nippon Seiro Co., Ltd.
Antioxidant: Antigene 6C (antioxidant, N-(1,3-dimethylbutyl)-N'-phenyl-p-phenylenediamine) available from Sumitomo Chemical Co., Ltd.
Stearic acid: TSUBAKI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (N,N'-diphenylguanidine, DPG) available from Ouchi Shinko Chemical Industrial Co., Ltd.

### <Synthesis Example 1>

Aluminum chloride and toluene were added to a glass flask purged with inert gas, and then styrene and α-methylstyrene were dropwise added. To the reaction solution was dropwise added a toluene solution of isoprene to which allyltriethoxysilane was added by a slurry method. Water was added to the reaction solution to terminate the reaction. After repeating the step of removing the aqueous layer by liquid-liquid separation, the organic layer obtained by liquid-liquid separation was dried by blowing air to evaporate the toluene and then dried under reduced pressure to obtain a modified styrene-α-methylstyrene resin (functionalized resin 1).

### <Synthesis Example 2>

A polyterpene resin and toluene were introduced into a flask, and the mixture was heated to 60°C with stirring and dissolved. To the solution was dropwise added a toluene solution of isoprene to which allyltriethoxysilane was added by a slurry method, and then a ruthenium catalyst was added to the solution. The mixture was stirred for 18 hours at 60°C and then poured into methanol, and the resulting solids were collected. The collected solids were dried for 16 hours at 35°C in a vacuum dryer to obtain a modified polyterpene resin (functionalized resin 2).

### (Examples and Comparative Examples)

According to the formulation shown in the tables, the materials other than the sulfur and vulcanization accelerators were kneaded for five minutes at 150°C using a 1.7 L Banbury mixer (Kobe Steel, Ltd.) to give a kneaded mixture. Next, the sulfur and vulcanization accelerators were added to the kneaded mixture, and they were kneaded for five minutes at 80°C using an open roll mill to obtain an unvulcanized rubber composition. The unvulcanized rubber composition was formed into the shape of a tread and assembled with other tire components to build an unvulcanized tire. The unvulcanized tire was press-vulcanized at 150°C for 12 minutes to prepare a test tire (size: 175/60R18).

The test tires prepared as above were subjected to physical property measurements and evaluation as described below. The results are shown in the tables. It should be noted that Comparative Examples 1-1 and 2-1 are used as standards of comparison in Tables 1 and 2, respectively.

### <Acetone extractable content (AE) >

The amount of the substances extracted with acetone from a rubber specimen cut out of the tread of each test tire was measured by a method for measuring the acetone extractable content in accordance with JIS K 6229. Acetone extractable content (% by mass) = (Mass of sample before extraction - Mass of sample after extraction)/Mass of sample before extraction × 100

### <Polymer content (PC) >

PC (% by mass) was calculated from a decrease (mass) measured when the sample after the acetone extraction in "Acetone extractable content (AE)" was heated (from room temperature to 750°C) in nitrogen for pyrolysis and gasification of the organic matter in accordance with JIS K6226-1:2003.

### <Carbon black content (BC)>

BC (% by mass) was calculated from a decrease (mass) measured when the sample after the pyrolysis and gasification in "Polymer content (PC)" was heated in the air for oxidative combustion.

### <Ash content (Ash) >

Ash (% by mass) was calculated from the measured mass of the components (ash) which remained unburned in the oxidative combustion in "Carbon black content (BC)".

### <Wet grip performance>

The test tires were mounted on each wheel of a front-engine, front-wheel-drive car of 2000 cc displacement made in Japan. The braking distance of the car with an initial speed of 100 km/h on a wet asphalt road surface was determined and expressed as an index (wet grip performance index) relative to that of the standard comparative example taken as 100. A higher index indicates a shorter braking distance and better wet grip performance.

### <Fuel economy>

The rolling resistance of the test tires was measured when they were run under conditions including a 15×6JJ rim, an internal pressure of 230 kPa, a load of 3.43 kN, and a speed of 80 km/h using a rolling resistance tester, and expressed as an index (fuel economy index) relative to that of the standard comparative example taken as 100. A higher index indicates a smaller rolling resistance and better fuel economy.

### <Abrasion resistance on wet road surface>

The test tires were mounted on each wheel of a front-engine, front-wheel-drive car of 2000 cc displacement made in Japan. The car was run on a wet asphalt road to measure the groove depth in the tire tread portion after running 8000 km. A distance that caused a 1 mm decrease in tire groove depth was calculated and expressed as an index (index of abrasion resistance on wet road surface) relative to that of the standard comparative example taken as 100. A higher index indicates a longer distance and better abrasion resistance on a wet road surface.

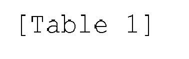

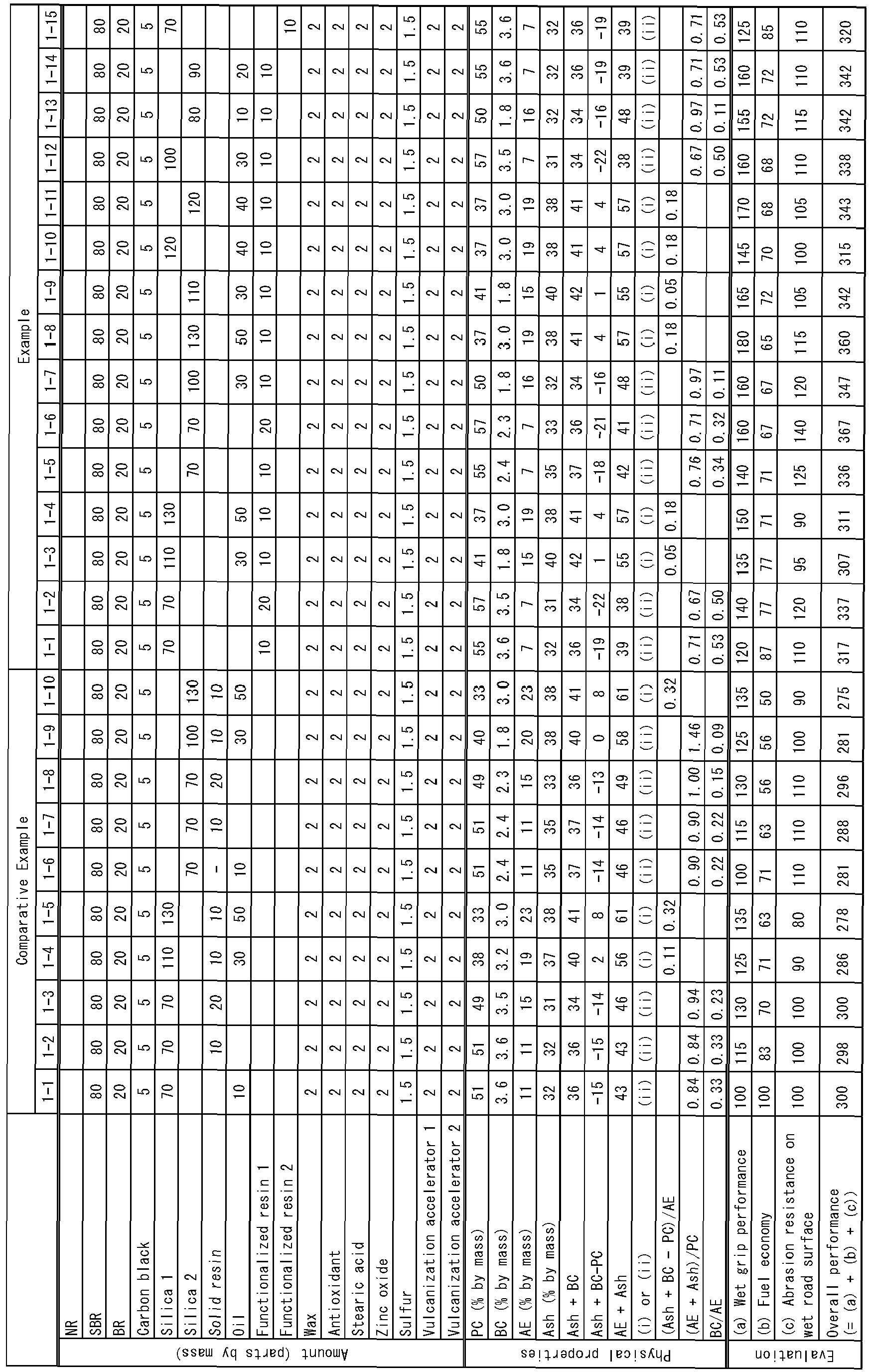

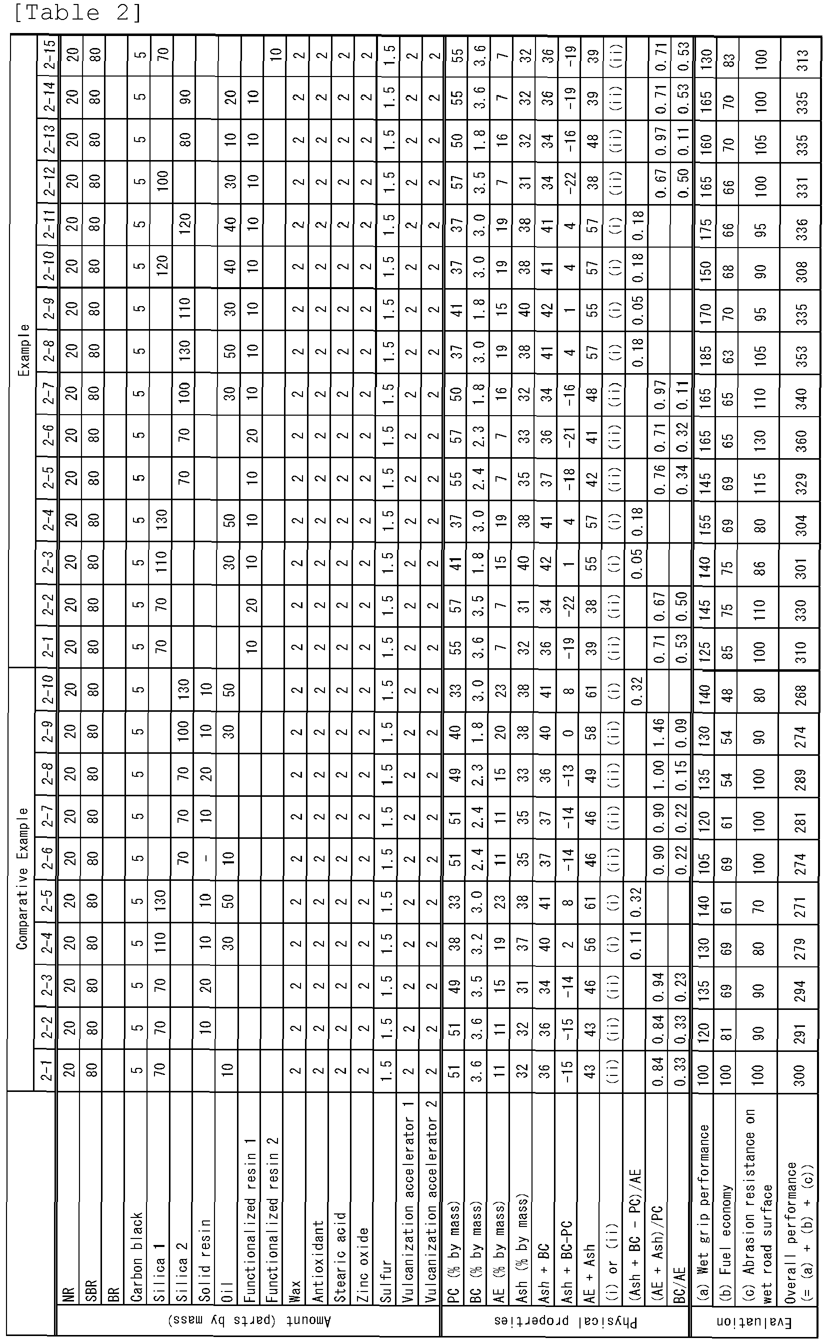

The tires of the examples which contained one or more elastomer components, silica, carbon black, and the above-described functionalized resin and satisfied relationships (i) and (ii) exhibited excellent overall performance in terms of fuel economy, abrasion resistance on a wet road surface, and wet grip performance (as expressed by the sum of the three indices of fuel economy, abrasion resistance on wet road surface, and wet grip performance).

Moreover, the overall performance was also excellent when a functionalized resin was used that was obtained by functionalizing a solid resin such as a solid styrene resin, terpene resin, coumarone-indene resin, p-t-butylphenol acetylene resin, acrylic resin, dicyclopentadiene resin (DCPD resin), C5 petroleum resin, C9 petroleum resin, or C5/C9 petroleum resin with allyltriethoxysilane or other functional compound as described above.

Exemplary embodiments of the present disclosure include:
Embodiment 1. A tire, including an elastomer composition, the elastomer composition containing:
   one or more elastomer components;
   silica;
   carbon black; and
   a functionalized resin having a functional group containing at least one element selected from the group consisting of oxygen, silicone, and nitrogen,
   the elastomer composition satisfying the following relationships (i) and (ii):
      (i) when Ash + BC > PC, Ash + BC - PC ≤ AE;
      (ii) when Ash + BC ≤ PC, AE + Ash ≤ PC and BC ≤ AE
      wherein PC represents a polymer content, BC represents a carbon black content, AE represents an acetone extractable content, and Ash represents an ash content.
Embodiment 2. The tire according to Embodiment 1,
   wherein the silica includes a silica having a nitrogen adsorption specific surface area of 180 m²/g or more.
Embodiment 3. The tire according to Embodiment 1 or 2,
   wherein AE is lower than 20% by mass.
Embodiment 4. The tire according to any one of Embodiments 1 to 3,
   wherein the elastomer components include two or more elastomer components, and at least one of the elastomer components is an isoprene-based rubber or a polybutadiene rubber.
Embodiment 5. The tire according to any one of Embodiments 1 to 4,
   wherein the elastomer composition has a styrene-butadiene rubber content of 10 to 90% by mass based on 100% by mass of the elastomer components.
Embodiment 6. The tire according to any one of Embodiments 1 to 5,
   wherein the functionalized resin has a polymer backbone containing at least one selected from the group consisting of solid styrene resins, coumarone-indene resins, terpene resins, p-t-butylphenol acetylene resins, acrylic resins, dicyclopentadiene resins, C5 petroleum resins, C9 petroleum resins, and C5/C9 petroleum resins.
Embodiment 7. The tire according to any one of Embodiments 1 to 6,
   wherein the elastomer composition has a functionalized resin content of 3 to 35 parts by mass per 100 parts by mass of the elastomer components.
Embodiment 8. The tire according to any one of Embodiments 1 to 7,
   wherein (i) when Ash + BC > PC, the elastomer composition has an oil content of 10 to 90 parts by mass per 100 parts by mass of the elastomer components, and
   (ii) when Ash + BC ≤ PC, the elastomer composition has an oil content of 20 parts by mass or less per 100 parts by mass of the elastomer components.
Embodiment 9. The tire according to any one of Embodiments 1 to 8,
   wherein (i) when Ash + BC > PC, (Ash + BC - PC)/AE ≤ 0.50, PC ≥ 20% by mass, BC ≥ 1.0% by mass, AE ≥ 8% by mass, and Ash ≥ 30% by mass, and
   (ii) when Ash + BC ≤ PC, (AE + Ash)/PC ≤ 0.97, BC/AE ≤ 0.53, PC ≥ 40% by mass, BC ≥ 1.0% by mass, AE ≥ 5% by mass, and Ash ≥ 20% by mass.
Embodiment 10. The tire according to any one of Embodiments 1 to 9,
   wherein (i) when Ash + BC > PC, the elastomer composition has a filler content of 80 to 200 parts by mass per 100 parts by mass of the elastomer components, and
   (ii) when Ash + BC ≤ PC, the elastomer composition has a filler content of 30 to 150 parts by mass per 100 parts by mass of the elastomer components.
Embodiment 11. The tire according to any one of Embodiments 1 to 10,
   wherein (i) when Ash + BC > PC, the elastomer composition has a silica content of 80 to 200 parts by mass per 100 parts by mass of the elastomer components, and
   (ii) when Ash + BC ≤ PC, the elastomer composition has a silica content of 30 to 150 parts by mass per 100 parts by mass of the elastomer components.
Embodiment 12. The tire according to any one of Embodiments 1 to 11,
   wherein the elastomer composition has a carbon black content of 1 to 30 parts by mass per 100 parts by mass of the elastomer components.
Embodiment 13. The tire according to any one of Embodiments 1 to 12,
   wherein the tire includes a rubber layer 1 including the elastomer composition, and a rubber layer 2 radially inwardly adjacent to the rubber layer 1, and
   the rubber layer 1 and the rubber layer 2 have a difference in acetone extractable content (AE) within 10% by mass.
Embodiment 14. The tire according to any one of Embodiments 1 to 13, including a tread having a negative ratio of 50% or lower.

### REFERENCE SIGNS LIST

- 2: pneumatic tire
- 4: tread
- 6: sidewall
- 8: wing
- 10: clinch
- 12: bead
- 14: carcass
- 16: belt
- 18: band
- 20: innerliner
- 22: chafer
- 24: tread face
- 26: groove
- 28: base layer
- 30: cap layer
- 32: core
- 34: apex
- 36: carcass ply
- 36a: main portion
- 36b: folded portion
- 38: interior layer
- 40: exterior layer
- 42: main groove
- 44: rib
- CL: equatorial plane of tire 2

## Claims

1. A tire, comprising an elastomer composition, the elastomer composition comprising:
one or more elastomer components;
silica;
carbon black; and
a functionalized resin having a functional group containing at least one element selected from the group consisting of oxygen, silicone, and nitrogen,
the elastomer composition satisfying the following relationships (i) and (ii):
(i) when Ash + BC > PC, Ash + BC - PC ≤ AE;
(ii) when Ash + BC ≤ PC, AE + Ash ≤ PC and BC ≤ AE
wherein PC represents a polymer content, BC represents a carbon black content, AE represents an acetone extractable content, and Ash represents an ash content.

2. The tire according to claim 1,
wherein the silica includes a silica having a nitrogen adsorption specific surface area of 180 m²/g or more.

3. The tire according to claim 1 or 2,
wherein AE is lower than 20% by mass.

4. The tire according to any one of claims 1 to 3,
wherein the elastomer components include two or more elastomer components, and at least one of the elastomer components is an isoprene-based rubber or a polybutadiene rubber.

5. The tire according to any one of claims 1 to 4,
wherein the elastomer composition has a styrenebutadiene rubber content of 10 to 90% by mass based on 100% by mass of the elastomer components.

6. The tire according to any one of claims 1 to 5,
wherein the functionalized resin has a polymer backbone comprising at least one selected from the group consisting of solid styrene resins, coumarone-indene resins, terpene resins, p-t-butylphenol acetylene resins, acrylic resins, dicyclopentadiene resins, C5 petroleum resins, C9 petroleum resins, and C5/C9 petroleum resins.

7. The tire according to any one of claims 1 to 6,
wherein the elastomer composition has a functionalized resin content of 3 to 35 parts by mass per 100 parts by mass of the elastomer components.

8. The tire according to any one of claims 1 to 7,
wherein (i) when Ash + BC > PC, the elastomer composition has an oil content of 10 to 90 parts by mass per 100 parts by mass of the elastomer components, and
(ii) when Ash + BC ≤ PC, the elastomer composition has an oil content of 20 parts by mass or less per 100 parts by mass of the elastomer components.

9. The tire according to any one of claims 1 to 8,
wherein (i) when Ash + BC > PC, (Ash + BC - PC)/AE ≤ 0.50, PC ≥ 20% by mass, BC ≥ 1.0% by mass, AE ≥ 8% by mass, and Ash ≥ 30% by mass, and
(ii) when Ash + BC ≤ PC, (AE + Ash)/PC ≤ 0.97, BC/AE ≤ 0.53, PC ≥ 40% by mass, BC ≥ 1.0% by mass, AE ≥ 5% by mass, and Ash ≥ 20% by mass.

10. The tire according to any one of claims 1 to 9,
wherein (i) when Ash + BC > PC, the elastomer composition has a filler content of 80 to 200 parts by mass per 100 parts by mass of the elastomer components, and
(ii) when Ash + BC ≤ PC, the elastomer composition has a filler content of 30 to 150 parts by mass per 100 parts by mass of the elastomer components.

11. The tire according to any one of claims 1 to 10,
wherein (i) when Ash + BC > PC, the elastomer composition has a silica content of 80 to 200 parts by mass per 100 parts by mass of the elastomer components, and
(ii) when Ash + BC ≤ PC, the elastomer composition has a silica content of 30 to 150 parts by mass per 100 parts by mass of the elastomer components.

12. The tire according to any one of claims 1 to 11,
wherein the elastomer composition has a carbon black content of 1 to 30 parts by mass per 100 parts by mass of the elastomer components.

13. The tire according to any one of claims 1 to 12,
wherein the tire comprises a rubber layer 1 comprising the elastomer composition, and a rubber layer 2 radially inwardly adjacent to the rubber layer 1, and
the rubber layer 1 and the rubber layer 2 have a difference in acetone extractable content (AE) within 10% by mass.

14. The tire according to any one of claims 1 to 13, comprising a tread having a negative ratio of 50% or lower.
